Europäisches Patentamt

European Patent Office

Office européen des brevets

(11) Publication number: **0 380 261**
**A2**

# EUROPEAN PATENT APPLICATION

(21) Application number: **90300613.8**

(22) Date of filing: **22.01.90**

(51) Int. Cl.⁵: **H04B 7/26, H04Q 7/04**

(30) Priority: **23.01.89 US 300661**

(43) Date of publication of application:
**01.08.90 Bulletin 90/31**

(84) Designated Contracting States:
**AT BE CH DE FR GB IT LI LU NL SE**

(71) Applicant: **MOTOROLA, INC.**
**1303 East Algonquin Road**
**Schaumburg, IL 60196(US)**

(72) Inventor: **Kotzin, Michael Dale**
**45 Somerset Lane**
**Buffalo Grove, Illinois 60089(US)**
Inventor: **Van Den Heuvel, Anthony P.**
**6355 NW 71st Terrace**
**Parkland, Florida 33067(US)**

(74) Representative: **Dunlop, Hugh Christopher et**
**al**
**Motorola European Intellectual Property**
**Operations Jays Close Viables Industrial**
**Estate**
**Basingstoke, Hampshire RG22 4PD(GB)**

(54) **FDM inbound/TDM outbound communication system.**

(57) An apparatus is provided for arranging an RF trunked communication system into a multiplicity of individual RF trunked communication subsystems. Within each subsystem, the subscriber units utilize Frequency Division Multiplexing (FDM) to communicate with the fixed equipment (inbound). Also, within certain subsystems, the fixed equipment utilizes Time Division Multiplexing (TDM) to communicate with the subscriber units (outbound). One advantage of this arrangement is that the subsystems may be further arranged to share one or more inbound FDM channels and one or more outbound TDM time slots as a duplex (inbound and outbound) control channel.

FIG.3

FIG.4

EP 0 380 261 A2

# FDM INBOUND/TDM OUTBOUND COMMUNICATION SYSTEM

## Cross Reference to Related Application

The subject matter of U. S. Patent No. 4,692,945, entitled "Dispatch Trunked Radio System," hereinafter the "FDM Control Information Application," issued September 8, 1987, by inventor Zdunek, K., and assigned to the same assignee as the present application, is hereby incorporated by reference. Also, the subject matter of U. S. patent application Serial No. 07/300,392, entitled "Multiple Control Slot TDM/FDM Communication System," hereinafter the "TDM Control Information Application," filed January 23, 1989, by inventors Kotzin et al., and assigned to the same assignee as the present application, is also hereby incorporated by reference. A copy of the latter application is filed herewith.

## Background of the Invention

This invention pertains to trunked RF communication systems.

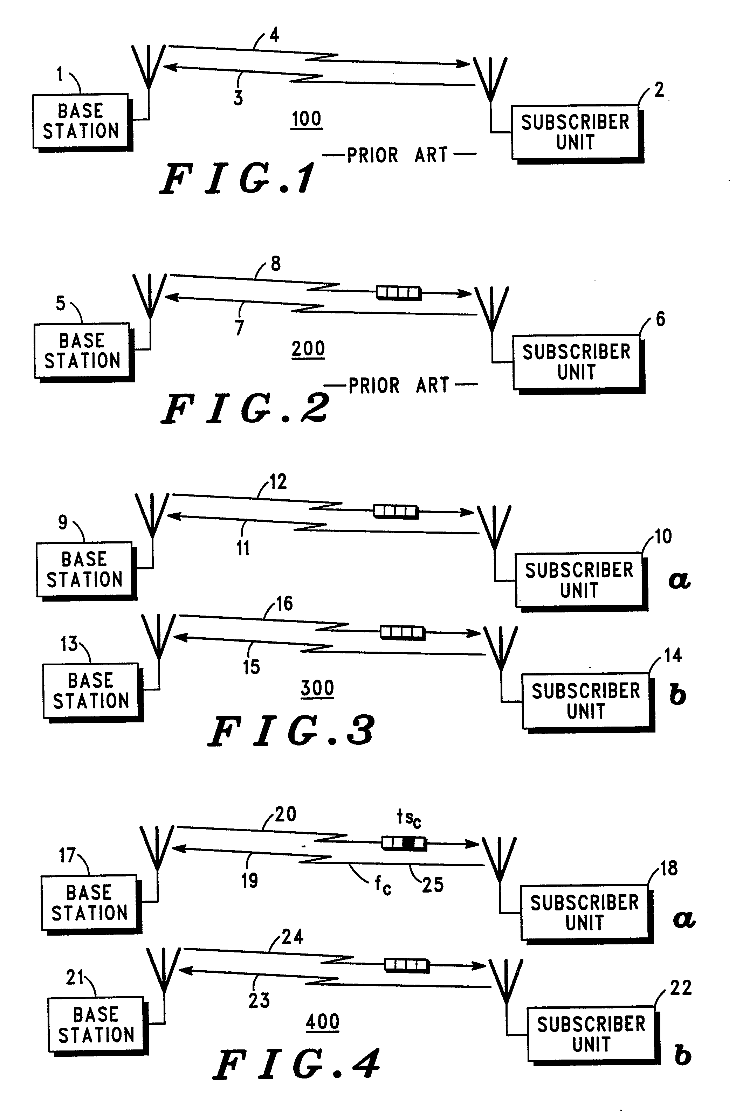

For many years trunked communication systems have utilized Frequency Division Multiplexing (FDM) for communications in both the inbound (towards the fixed equipment) and outbound (away from the fixed equipment) directions, basically as depicted in Fig. 1. Shown therein is a trunked communication system (100) comprising fixed equipment (1) and a plurality of subscriber units (2). With this arrangement, the subscriber units (2) communicate with the fixed equipment (1) using a multiplicity of inbound FDM channels (3). Also with this arrangement, the fixed equipment (1) communicates with the subscriber units (2) using a multiplicity of outbound FDM channels (4).

For some time, it has been known that Time Division Multiplexing (TDM) may be utilized in trunked systems for communicating in the outbound direction. Such an arrangement (200) is shown in Fig. 2. There is shown a trunked communication system comprising fixed equipment (5) arranged to communicate with a plurality of subscriber units (6) over a multiplicity of FDM inbound channels (7) and a single TDM outbound channel comprising a multiplicity of time slots (8).

Prior art arrangements have utilized 25 KHz channel pairs that are widely spaced in frequency. For example, in the U. S., land-mobile communication uses the 806-821 MHz bands for the inbound channels and the 851-866 MHz bands for the outbound channels. With this arrangement, each 25 KHz inbound channel is paired with a 25 KHz outbound channel that is higher in frequency by 45 MHz.

Typically trunked systems, as in the prior art, have a plurality of 25 KHz channels, typically between 3 and 20, with one channel pair being allocated as the common control channel. Within such a typical trunked system, the inbound and outbound channel assignments are not contiguous. For example, a particular inbound channel may be centered at 806.0125 MHz, with the "neighboring" (next-closest) inbound channel being centered at 807.0125 MHz--a "gap" of 1 MHz, or forty 25 KHz channels.

Recent technological advances have made it possible to produce radios capable of transceiving using a channel spacing of only 6.25 KHz, or only one-fourth the prior channel spacing of 25 KHz. As a result, the same amount of frequency spectrum can now support four (4) times the amount of simultaneous communication paths.

Historically, new advances in land-mobile technology have been deployed by introducing wholly-new trunking systems. To avoid the possibility of the new trunking systems conflicting with their existing (and older) trunking system counterparts, the new trunking systems were designed to operate on different channels than the older trunking systems. As a result, in order to introduce the new trunking system technology, a new portion of the frequency spectrum had to be allocated. For example, when 12.5 KHz narrow-band FM technology was first introduced, new frequencies were allocated--896-901 MHz for the inbound channels and 932-937 MHz for the outbound channels. With this 12.5 KHz narrow-band FM arrangement, each 12.5 KHz inbound channel is paired with a 12.5 KHz outbound channel that is higher in frequency by 36 MHz.

It is known that using Time Division Multiplexing (TDM) for the outbound channels would offer certain advantages over FDM. For example, this would tend to make the subscriber unit somewhat simpler and cheaper. Also, new features would be possible, such as allowing the subscriber to simultaneously monitor a multiplicity of outbound time slots (channels). Therefore, the desirability of introducing a new trunking system utilizing FDM inbound and TDM outbound has been apparent for some time.

As explained above, historically new trunking system technology has been deployed by embodying the new technology in a wholly-new trunking system that used a newly-allocated portion of the frequency spectrum. Recently this approach, however, has been hindered by the rapidly-dwindling supply of available, unallocated frequency spectrum. As a result, the applicant has discovered that it is desirable to find a way to exploit the advantages of an FDM inbound/TDM outbound trunking system architecture without the necessity of allocating new frequency spectrum. With this arrangement, the new FDM inbound/TDM outbound trunking system would operate on the same spectrum currently utilized by the existing FDM inbound/FDM outbound trunking systems of the prior art.

## Summary of the Invention

Accordingly, it is an object of the present invention to provide a trunking system that takes full advantage of an FDM inbound/TDM outbound architecture while using the same frequency spectrum as existing trunking systems using the existing FDM inbound/FDM outbound architecture.

It is a further object of the present invention to provide a means for the graceful conversion of trunking channels in an existing FDM inbound/FDM outbound trunking system to an FDM inbound/TDM outbound architecture.

Briefly, according to the invention, a trunking system with a plurality of channels is rearranged by distributing the channels into n subsystems, where n is equal to or greater than 2. At least one of these subsystems uses FDM inbound/TDM outbound, the inbound FDM channels being contiguous to one another.

## Brief Description of the Drawings

Fig. 1 depicts a first typical RF trunked communication system using FDM inbound and FDM outbound, as in the prior art.

Fig. 2 depicts a second typical RF trunked communication system using FDM inbound and TDM outbound, as in the prior art.

Fig. 3 depicts a system comprising two RF trunked communication subsystems, each subsystem using FDM inbound and TDM outbound, as in the present invention.

Fig. 4 depicts an arrangement of two subsystems using FDM inbound and TDM outbound, as in the present invention, with the subsystems further arranged to share a common duplex control channel.

## Detailed Description of the Invention

The FDM inbound/TDM outbound arrangement of the present invention (300) is shown in Fig. 3. There is depicted a trunked communication system comprising two individual trunked communication subsystems, A and B. As shown, subsystem A comprises fixed equipment (9) arranged to communicate with a plurality of subscriber units (10) over 4 6.25 KHz-wide inbound FDM channels (11) and a single outbound TDM channel comprising 4 time slots (12).

Referring still to Fig. 3, since each FDM channel requires 6.25 KHz of bandwidth to transport its information, the 4 inbound FDM channels occupy 25 KHz of contiguous spectrum. Further, since the outbound TDM channel comprising 4 TDM time slots (12) contains the same amount of information as the 4 inbound FDM channels, it also occupies 25 KHz of contiguous spectrum.

Referring still to Fig. 3, assuming the previous 25 KHz inbound FDM channel was centered at 806.0125 MHz, then the 4 inbound 6.25 KHz FDM channels of the present invention may be centered at the 4 adjacent frequencies, i.e., 806.003133 MHz, 806.00938 MHz, 806.01563 MHz, and 806.02188 MHz. Also with this arrangement, the outbound TDM channel, being 25 KHz wide, may be centered at the corresponding allocated outbound frequency of 851.0125 MHz.

Also as shown in Fig. 3, subsystem B comprises fixed equipment (13) arranged to communicate with a plurality of subscriber units (14) over a multiplicity of inbound FDM channels (15) and a single TDM outbound channel (16). The configuration of this subsystem, with the exception of the specific radio frequency allocations for the channels, is identical to that of subsystem A, as described above.

One advantage of the present invention's FDM inbound/TDM outbound architecture is that the individual subsystems themselves may be further arranged to share one or more inbound FDM channels and one or more outbound TDM time slots to form one or more duplex control signal communication paths, or duplex control channels. This arrangement (400) is shown in Fig. 4. There is depicted a trunked communication system comprising two individual trunked communication subsystems, A and B, each subsystem utilizing FDM inbound and TDM outbound. As shown, subsystem A comprises fixed equipment (17) arranged to communicate with subscriber units (18) over inbound FDM channels (19) and a single TDM outbound channel (20). Also as shown, subsystem B comprises fixed equipment (21) arranged to communicate with subscriber units (22) over inbound FDM channels (23) and a single outbound TDM channel (24). As shown, the subsystem A inbound FDM channels (19) contain a common control frequency (channel) $f_c$ (25) that is used by both subsystems, A and B. Also as shown, the subsystem A outbound TDM channel (20) contains a common control time slot (channel) $ts_c$ (26) that is used by both subsystems, A and B. This common duplex control channel arrangement is fully supported by the method and apparatus disclosed in the "FDM Control Information Application," as herein previously incorporated by reference, and by the method and apparatus disclosed in the "TDM Control Information Application," also as herein previously incorporated by reference.

## Claims

1. An RF trunked communication system comprising at least 2 subsystems, each subsystem comprising fixed equipment arranged to communicate with a plurality of subscriber units, wherein at least one subsystem includes:

(a) an outbound TDM channel comprising a predetermined number (y) of time slots capable of supporting at least y simultaneous outbound subscriber communications;

(b) y inbound FDM channels, each capable of supporting one inbound subscriber communication.

2. The RF trunked communication system of claim 1 wherein said at least 2 subsystems share at least one control channel, said control channel comprising an outbound TDM time slot and an inbound FDM channel.

3. An RF trunked communication system comprising at least 2 subsystems, each subsystem comprising fixed equipment arranged to communicate with a plurality of subscriber units, wherein at least one subsystem includes:

(a) at least one outbound TDM channel comprising at least 2 time slots capable of supporting at least 2 simultaneous outbound subscriber communications;

(b) at least two spectrally-contiguous inbound FDM channels, each being capable of supporting one inbound subscriber communication.

4. The RF trunked communication system of claim 3 wherein said at least 2 subsystems share at least one control channel, said control channel comprising an outbound TDM time slot and an inbound FDM channel.

EP 0 380 261 A2

$FIG.1$ — PRIOR ART —

$FIG.2$ — PRIOR ART —

$FIG.3$

$FIG.4$